Europäisches Patentamt

European Patent Office

Office européen des brevets

(11) Veröffentlichungsnummer: **0 198 824**
**B1**

(12) **EUROPÄISCHE PATENTSCHRIFT**

(45) Veröffentlichungstag der Patentschrift:
03.02.88

(21) Anmeldenummer: **84904129.8**

(22) Anmeldetag: **14.11.84**

(86) Internationale Anmeldenummer:
**PCT/EP 84/00360**

(87) Internationale Veröffentlichungsnummer:
**WO 85/02380 (06.06.85 Gazette 85/13)**

(51) Int. Cl.⁴: **B 62 D 5/08**

(54) **HYDRAULISCHE HILFSKRAFTLENKUNG, INSBESONDERE FÜR KRAFTFAHRZEUGE.**

(30) Priorität: **01.12.83 PCT/EP83/00321**

(43) Veröffentlichungstag der Anmeldung:
**29.10.86 Patentblatt 86/44**

(45) Bekanntmachung des Hinweises auf die Patenterteilung:
**03.02.88 Patentblatt 88/5**

(84) Benannte Vertragsstaaten:
**DE FR GB SE**

(56) Entgegenhaltungen:
**FR-A-2 237 798**
**FR-A-2 398 653**
**US-A-3 292 499**

(73) Patentinhaber: **ZAHNRADFABRIK FRIEDRICHSHAFEN AKTIENGESELLSCHAFT, Löwentaler Strasse 100 Postfach 2520, D-7990 Friedrichshafen 1 (DE)**

(72) Erfinder: **BREITWEG, Werner, Lauchhofstr. 7, D-7070 Schwäbisch Gmünd (DE)**

(74) Vertreter: **Raue, Reimund, Zahnradfabrik Friedrichshafen AG Löwentaler Strasse 100 Postfach 2520, D-7990 Friedrichshafen 1 (DE)**

**Beschreibung**

Die Erfindung betrifft eine hydraulische Hilfskraftlenkung nach dem Oberbegriff von Anspruch 1.

Eine derartige Hilfskraftlenkung ist z. B. aus der DE-OS 24 34 604 bekannt, in welcher zwei Lenkspindelteile über einen Drehstab miteinander verbunden sind. Der ein Lenkhandrad tragende erste Lenkspindelteil ist an seinem Ende als Drehschieber ausgeführt, während der ein Antriebsritzel tragende und in eine Zahnstange eingreifende zweite Lenkspindelteil mit einer Steuerbüchse gekuppelt ist. Der Drehschieber ist in der Steuerbüchse relativ verdrehbar angeordnet, so daß über ein zugehöriges Längsnutensystem ein Arbeitszylinder ansteuerbar ist. Als Rückwirkungseinrichtung sind zwischen dem Drehschieber und der Steuerbüchse in Bohrungen bewegliche Kugeln eingesetzt, die mit Schrägflächen von Einkerbungen des mit dem Lenkhandrad verbundenen Lenkspindelteils zusammenwirken. Diese Kugeln werden in Abhängigkeit vom Arbeitsdruck mehr oder weniger gegen die Schrägflächen gedrückt, so daß dem Fahrer am Lenkhandrad die jeweils benötigte Lenkhilfskraft als sogenanntes Fahrgefühl mitgeteilt wird. Die bekannte Rückwirkungseinrichtung arbeitet nur dann zufriedenstellend, wenn eine äußerst präzise Zuordnung der Einkerbungen am ersten Lenkspindelteil zum Nutensystem von Drehschieber und Steuerbüchse eingehalten wird. Geringste Fertigungsfehler führen nämlich dazu, daß die Kugeln in der Neutralstellung des Drehschieberventils nicht gleichzeitig an beiden Schrägflächen der Einkerbungen anliegen, wodurch diese auch kein in beiden Lenkrichtungen ausgeglichenes Rückstellmoment erzeugen können. Hinzu kommt, daß die Kugeln in ihren zugehörigen Führungsbohrungen wegen der zu geringen Dichtlänge nur unzureichend abdichten, so daß bei geringen Arbeitsdrücken ein feinfühliger Aufbau des Rückwirkungsdruckes nicht möglich erscheint.

Es ist daher Aufgabe der Erfindung für eine mit einem Drehschieberventil ausgestattete Hilfskraftlenkung eine unter allen Belastungsverhältnissen exakt ansprechende Rückwirkungseinrichtung mit möglichst geringem Herstellungsaufwand zu schaffen.

Diese Aufgabe ist durch die in den Ansprüchen angegebene Merkmalskombination gelöst. Ausgestaltungen der Erfindung ergeben sich aus den Unteransprüchen.

Der in das Ventilgehäuse koaxial zum Drehschieberventil eingebaute Rückwirkungskolben stützt sich an seinem Innendurchmesser über eine Schrägverzahnung auf den mit dem Drehschieber einteilig ausgeführten ersten Lenkspindelteil ab. Der Außendurchmesser des Rückwirkungskolbens ist in einer hülsenförmigen Verlängerung der Steuerbüchse in einer Axialführung abgestützt. Beidseitig des Rückwirkungskolbens sind an die Druckräume des Arbeitszylinders angeschlossene Kammern vorgesehen. Beim Lenken wird immer eine der beiden Kammern vom Arbeitsdruck beaufschlagt, so daß der Rückwirkungskolben eine axiale Verstellkraft erfährt, die über die Schrägverzahnung als Drehmoment auf den ersten Lenkspindelteil wirkt und zwar immer entgegengesetzt zu der jeweils am Lenkhandrad eingeleiteten Drehbewegung. Diese in Verbindung mit einem Drehschieberventil anwendbare Rückwirkungseinrichtung ist aus exakt aufeinander abstimmbaren und daher präzise ansprechenden Bauteilen aufgebaut.

Weitere Einzelheiten sind nachfolgend anhand der Zeichnung näher erläutert. Es zeigen:

Fig. 1 den Längsschnitt einer Zahnstangenlenkung mit der erfindungsgemäßen Rückwirkungseinrichtung;

Fig. 2 eine vergrößerte Draufsicht auf die Schrägverzahnung am ersten Lenkspindelteil;

Fig. 3 einen Schnitt nach der Linie III-III in Fig. 2;

Fig. 4 eine Draufsicht nach Fig. 2 mit in der Schrägverzahnung abrollenden Kugeln;

Fig. 5 einen Schnitt nach der Linie V-V in Fig. 4;

Fig. 6 die Anwendung der Rückwirkungseinrichtung in einer Kugelmutter-Hilfskraftlenkung.

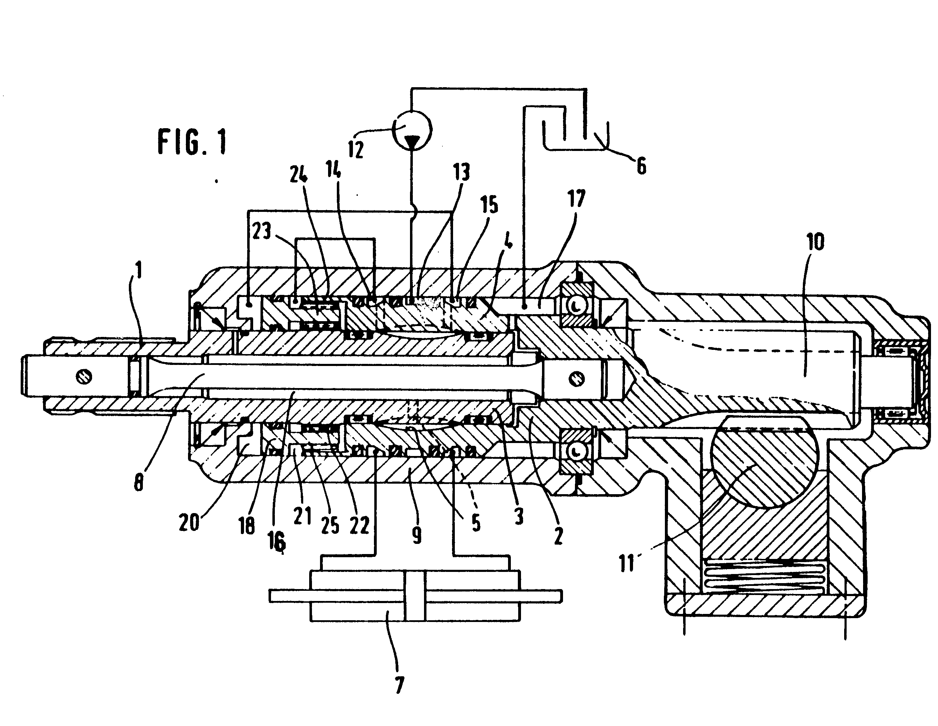

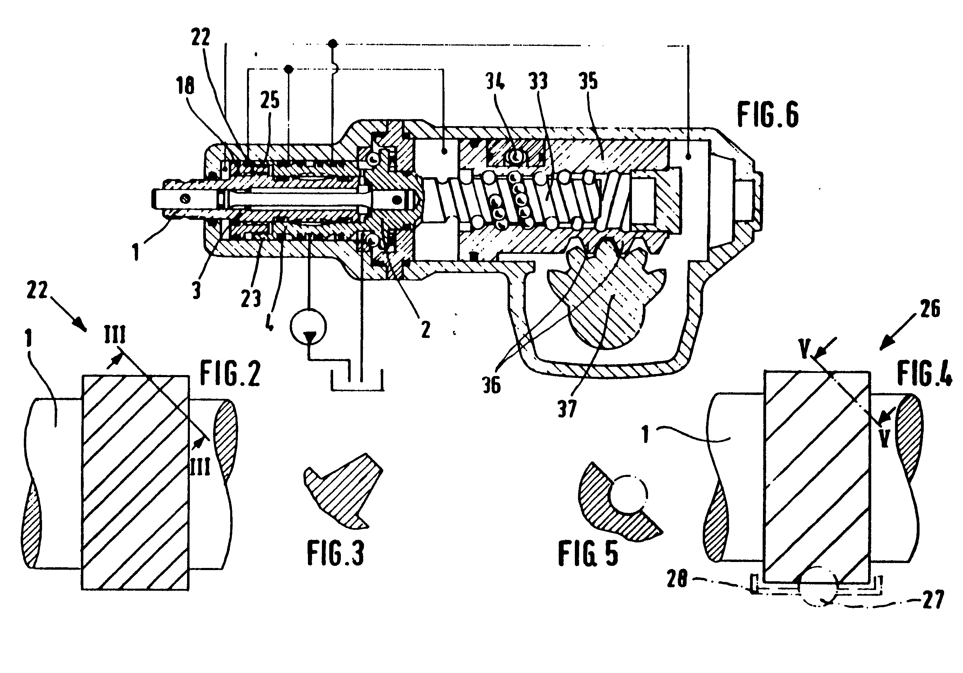

In Fig. 1 besteht eine zweiteilige Lenkspindel aus einem ersten, einen Drehschieber 3 tragenden Lenkspindelteil 1 und aus einem zweiten Lenkspindelteil 2, welches einstückig mit einer Steuerbüchse 4 hergestellt ist. Der Drehschieber 3 und die Steuerbüchse 4 wirken in bekannter Weise innerhalb eines Ventilgehäuses 9 als Drehschieberventil zusammen. Hierzu ist am Außenumfang des Drehschiebers 3 und an der Innenfläche der Steuerbüchse 4 ein axiales Steuernutensystem 5 vorhanden, über das das Drucköl auf Druckräume eines Arbeitszylinders 7 verteilt und das Rücklauföl in einen Behälter 6 zurückgeleitet wird. Mit dem Lenkspindelteil 1 ist ein nicht dargestelltes Lenkhandrad verbunden. Die beiden Lenkspindelteile 1 und 2 sind innerhalb eines vorgegebenen Steuerweges über einen Drehstab 8 gegeneinander elastisch verdrehbar gekuppelt. Das Lenkspindelteil 2 ist auf seiner der Steuerbüchse 4 abgewandten Seite als Ritzel 10 ausgeführt, das in eine Zahnstange 11 eingreift. Das von einer Pumpe 12 geförderte Drucköl wird über eine Zulaufringnut 13 dem axialen Steuernutensystem 5 zugeleitet und gelangt von dort je nach Lenkrichtung über eine Zylinderringnut 14 bzw. 15 zum Arbeitszylinder 7. Das Rücklauföl kann über eine den Drehstab 8 aufnehmende Bohrung 16 des Lenkspindelteils 1 und einen Ringraum 17 zum Behälter 6 zurückströmen.

Nach der Erfindung ist ein Rückwirkungskolben 18 so in das Ventilgehäuse 9 eingesetzt, daß zwei Kammern 20 und 21 entstehen. Die Kammer 20 ist an die zum rechten Druckraum des Arbeitszylinders 7 führende Zylinderringnut 15 und die Kammer 21 an die zum linken Druckraum führende Zylinderringnut 14 angeschlossen. Der Rückwirkungskolben 18 weist einen über eine Schrägverzahnung 22 in das Lenkspindelteil 1 eingreifenden Ringansatz 23 auf. Weiterhin greift dieser Ringansatz 23 mit seinem Außendurchmesser in eine an einer hülsenförmigen Verlängerung 24 der Steuerbüchse 4 vorgesehene Axialführung 25 (Geradverzahnung) ein.

Entsprechend der gewählten Lenkrichtung führt die über das Drehschieberventil 3, 4 angesteuerte Zylinderringnut 14 oder 15 den von der Pumpe 12 erzeugten und im Arbeitszylinder 7 wirksamen Arbeitsdruck.

Gleichzeitig wirkt dieser Druck auch in der Kammer 21 bzw. 20 auf den Rückwirkungskolben 18, so daß über die Schrägverzahnung 22 ein der Drehrichtung entgegengesetztes Lenkmoment als Rückwirkungskraft auf das Lenkspindelteil 1 einwirkt. Die Axialführung 25 verhindert dabei ein Drehen des Rückwirkungskolbens 18 gegenüber dem Lenkspindelteil 2.

Die Größe der erzeugten Rückwirkungskraft ist einerseits abhängig von der beaufschlagbaren Fläche des Rückwirkungskolbens 18 und andererseits vom Steigungswinkel der Schrägverzahnung 22. Bei einer gegebenen beaufschlagbaren Fläche des Rückwirkungskolbens 18 ergibt daher ein kleiner Steigungswinkel eine kleine und ein großer Steigungswinkel eine große Rückwirkungskraft. In der der Erfindung zugrunde liegenden Hilfskraftlenkung beträgt der Steigungswinkel vorzugsweise 45° (Fig. 2). - Um ein zu starkes Ansteigen der Rückwirkungskraft im Parkierbereich zu vermeiden, ist es vorteilhaft, den in den Kammern 20, 21 wirksamen Rückwirkungsdruck in bekannter Weise durch Abschneidventile auf einen Höchstwert zu begrenzen.

Fig. 4 und 5 zeigt die Ausführungsform einer Schrägverzahnung 26, die zur Reibungsverminderung Kugeln 27 enthält. Die Kugeln 27 sind z. B. in einem geschlitzten Käfig 28 gehalten, der zur Montage aufgeweitet und über die Schrägverzahnung 26 geschoben wird. Auch die nicht dargestellte Axialführung ist in diesem Falle mit Kugeln ausgerüstet.

Fig. 6 zeigt schließlich die Anwendung der erfindungsgemäßen Rückwirkungseinrichtung in einer Kugelmutter-Hydrolenkung. Das Drehschieberventil 3, 4 und die Rückwirkungseinrichtung 18, 22, 25 ist hier in gleicher Weise aufgebaut wie bereits in Verbindung mit Fig. 1 beschrieben. Der zweite Lenkspindelteil 2 ist jedoch abtriebsseitig als Gewindespindel 33 ausgebildet, die über eine Kugelkette 34 in eine als Arbeitskolben wirkende Lenkmutter 35 eingreift. Die Lenkmutter 35 steht ihrerseits über eine Verzahnung 36 mit einem an eine nicht sichtbare Lenkstockwelle angeschlossenen Lenksegment 37 in Verbindung.

**Bezugszeichen**

| | | | | | |
|---|---|---|---|---|---|
| 1 | erstes Lenkspindelteil | | 32 | Rückwirkungskolben |
| 2 | zweites Lenkspindelteil | | 33 | Gewindespindel (Fig. 6) |
| 3 | Drehschieber | | 34 | Kugelkette |
| 44 | Steuerbüchse | | 35 | Lenkmutter |
| 5 | Steuernutensystem | | 36 | Verzahnung |
| 6 | Behälter | | 37 | Lenksegment |
| 7 | Arbeitszylinder | | | |
| 8 | Drehstab | | | |
| 9 | Ventilgehäuse | | | |
| 10 | Ritzel | | | |
| 11 | Zahnstange | | | |
| 12 | Pumpe | | | |
| 13 | Zulaufringnut | | | |
| 14 | Zylinderringnut | | | |
| 15 | Zylinderringnut | | | |
| 16 | Bohrung von 1 | | | |
| 17 | Ringraum | | | |
| 18 | Rückwirkungskolben | | | |
| 19 | - | | | |
| 20 | Kammer | | | |
| 21 | Kammer | | | |
| 22 | Schrägverzahnung | | | |
| 23 | Ringansatz | | | |
| 24 | hülsenförmige Verlängerung von 4 | | | |
| 25 | Axialführung | | | |
| 26 | Schrägverzahnung (Fig. 4) | | | |
| 27 | Kugel | | | |
| 28 | Käfig | | | |
| 29 | - | | | |
| 30 | axial verlaufende Kugellaufbahnen | | | |
| 31 | schräg verlaufende Kugellaufbahnen | | | |

**Patentansprüche**

1. Hydraulische Hilfskraftlenkung, insbesondere für Kraftfahrzeuge mit folgenden Merkmalen:
- als Druckmittelsteuereinrichtung ist in einem Ventilgehäuse (9) ein Drehschieberventil (3, 4) vorhanden, welches einem Arbeitszylinder (7) Drucköl zusteuert;

0 198 824

- die Lenkspindel ist zweiteilig ausgeführt;
- der erste Lenkspindelteil (1) ist mit einem Lenkhandrad verbunden und trägt einen Drehschieber (3);
- der zweite Lenkspindelteil (2) ist über Antriebsglieder mit den lenkbaren Rädern verbunden und trägt eine Steuerbüchse (4);
- die beiden Lenkspindelteile (1,2) sind über einen Drehstab (8) miteinander verbunden;
- zwischen den beiden Lenkspindelteilen (1,2) ist eine am ersten Lenkspindelteil (1) eine hydraulische Rückwirkungskraft erzeugende Rückwirkungseinrichtung (18,22,25) vorgesehen, <u>gekennzeichnet</u> durch folgende Merkmale:
- die Rückwirkungseinrichtung (18, 22, 25) besteht aus einem beidseitig vom Arbeitsdruck beaufschlagbaren und koaxial zum Drehschieberventil (3, 4) eingebauten Rückwirkungskolben (18);
- der Rückwirkungskolben (18) stützt sich über eine Schrägverzahnung (22) auf dem ersten Lenkspindelteil (1) ab und
- der Rückwirkungskolben (18) ist über eine Axialführung (25) mit der Steuerbüchse (4) verbunden.

2. Hydraulische Hilfskraftlenkung nach Anspruch 1, <u>gekennzeichnet</u> durch folgende Merkmale:
- die Axialführung (25) ist in einer hülsenförmigen Verlängerung (24) der Steuerbüchse (4) eingearbeitet und
- der Rückwirkungskolben (18) weist einen Ringansatz (23) auf, dessen Außendurchmesser in die Axialführung (25) der Steuerbüchse (4) und dessen Innendurchmesser in die Schrägverzahnung (22) am Drehschieber (3) eingreift.

3. Hydraulische Hilfskraftlenkung nach Anspruch 1, dadurch <u>gekennzeichnet</u>, daß beaufschlagbare Kammern (20, 21) des Rückwirkungskolbens (18) mit den Druckräumen des Arbeitszylinders (7) verbunden sind.

4. Hydraulische Hilfskraftlenkung nach Anspruch 1, dadurch <u>gekennzeichnet</u>, daß der Rückwirkungskolben (18) zur Reibungsverminderung über Kugeln (27) in der Schrägverzahnung und in der Axialführung abgestützt ist (Fig. 4 und 5).

## Claims

1. Hydraulic power-assisted steering unit for motor vehicles, having the following characteristics:
- as a means of controlling the pressure medium, a valve housing (9) is fitted with a slide valve (3, 4) which directs pressurized oil to an operating cylinder (7);
- the steering column has two sections;
- the first section of the steering column (1) is connected to a manually operated wheel and is attached to an inner valve sleeve (3);
- the second section of the steering column (2) is connected to the steerable wheels via drive members and is attached to an outer valve sleeve (4);
- the two steering column sections (1, 2) are connected by a torque rod (8);
- a unit (18, 22, 25) is fitted between the two steering column sections (1, 2) to produce an hydraulic reaction force on the first section of the steering column, and is <u>characterized</u> in that:
- the reaction unit (18, 22, 25) consists of a reaction piston (18) which can be activated by the operating pressure on both sides, and which is fitted coaxially to the slide valve (3, 4);
- the reaction piston (18) is connected to the first steering column section (1) by means of an helical gear (22);
- the reaction piston (18) is connected to the outer valve sleeve (4) by an axial guide (25).

2. Hydraulic power-assisted steering unit according to Claim 1, <u>characterized</u> in that:
- the axial guide (25) is fitted to the end collar (24) on the outer valve sleeve (4), and
- the reaction piston (18) has a collar (23), whose external diameter engages in the axial guide (25) of the outer valve sleeve (4), and the internal diameter of which meshes with the helical gear (22) on the inner valve sleeve (3).

3. Hydraulic power-assisted steering unit according to Claim 1, <u>characterized</u> in that the reaction chambers (20, 21) of the reaction piston (18) are connected to the pressure chambers of the operating cylinder (7).

4. Hydraulic power-assisted steering unit according to Claim 1, <u>characterized</u> in that the reaction piston (18) is mounted on ball bearings (27) in the helical gear and in the axial guide in order to reduce friction (Fig. 4 and 5).

## Revendications

1. Servodirection hydraulique, en particulier pour un véhicule à moteur, dans laquelle:
- un organe de commande hydraulique comporte une soupape à tiroir rotatif (3, 4) qui est disposée dans un corps de soupape (9) et délivre de l'huile sous pression à un vérin (7);
- l'arbre de direction est réalisé en deux parties;
- la première partie (1) de l'arbre de direction est reliée à un volant à main et porte un tiroir rotatif (3)
- la seconde partie (2) de l'arbre de direction est reliée aux roues directrices par des éléments de

4

transmission et porte un manchon de commande (4);

- les deux parties (1, 2) de l'arbre de direction sont reliées l'une à l'autre par une barre de torsion (8);

- un organe de réaction (18, 22, 25) produisant une force hydraulique de réaction sur la première partie (1) de l'arbre de direction est prévu entre les deux parties (1, 2) de cet arbre;

caractérisé en ce que:

- l'organe de réaction (18, 22, 25) est constitué par un piston de réaction (18) qui peut recevoir des deux côtés la pression de travail et qui est monté coaxialement à la soupape à tiroir rotatif (3, 4);

- le piston de réaction (18) s'appuie par une denture hélicoïdale (22) sur la première partie (1) de l'arbre de direction, et

- le piston de réaction (18) est relié au manchon de commande (4) par un guidage axial (25).

2. Servodirection hydraulique selon la revendication 1, caractérisée en ce que:

- ledit guidage axial (25) est ménagé dans un prolongement tubulaire (24) du manchon de commande (4), et

- le piston de réaction (18) comporte un prolongement annulaire (23) dont l'extérieur est engagé dans le guidage axial (25) prévu sur le manchon de commande (4) et dont l'intérieur est engagé dans la denture hélicoïdale (22) prévue sur le tiroir rotatif (3).

3. Servodirection hydraulique selon la revendication 1, caractérisée en ce que des chambres (20, 21) d'actionnement du piston de réaction (18) sont reliées aux chambres de travail du vérin (7).

4. Servodirection hydraulique selon la revendication 1, caractérisée en ce que le piston de réaction (18) s'appuie par des billes (27) dans la denture hélicoïdale et dans le guidage axial (fig. 4 et 5), pour réduire le frottement.

FIG. 1

FIG.6

FIG.2

FIG.3

FIG 5

FIG.4

0 198 824